# EUROPEAN PATENT SPECIFICATION

(11) **EP 2 915 848 B1**
(45) Date of publication and mention of the grant of the patent: **30.05.2018**
(21) Application number: 12887673.7
(22) Date of filing: 31.10.2012
(51) Int. Cl.: C08L 63/00, C08L 25/08, C08G 59/42, C09D 163/00

(54) **THERMOSETTING RESIN COMPOSITION AND USE THEREOF**
WÄRMEHÄRTENDE HARZZUSAMMENSETZUNG UND VERWENDUNG DAVON
COMPOSITION DE RÉSINE THERMODURCISSABLE ET SES UTILISATIONS

(43) Date of publication of application: 09.09.2015
(73) Proprietor: Shengyi Technology Co., Ltd., Guangdong 523808 (CN)
(72) Inventor: SU, Minshe, Dongguan City Guangdong 523808 (CN); CHEN, Yong, Dongguan City Guangdong 523808 (CN); TANG, Guofang, Dongguan City Guangdong 523808 (CN); YANG, Zhongqiang, Dongguan City Guangdong 523808 (CN)
(74) Representative: Wallinger, Michael
(86) International application number: PCT/CN2012/083790
(87) International publication number: WO 2014/067082

(56) References cited:
- EP-A1- 1 229 079
- EP-A2- 1 083 198
- CN-A- 102 051 022
- CN-A- 102 372 900
- US-A1- 2010 240 811
- US-A1- 2011 224 332
- US-A1- 2011 278 052

## Description

### Technical field

The present invention relates to a resin composition, in particular, the present invention relates to a thermosetting resin composition and the application thereof in resin sheets, resin clad metal foils, prepregs, laminates, metal-clad laminates and printed wiring boards.

### Background art

In recent years, with the development of high-performance, high-functionalization and network in computer and information communication equipment, in order to transfer with high speed and deal with large-capacity information, operating signals tends to be high-frequency, and thus the circuit board is developed to be high multilayer and high wiring density, and new requirements are proposed for the base materials used, including: 1. good dielectric performances (i.e. low dielectric constant and low dielectric dissipation factor) and the ability of remaining stable in a wide range of temperature and frequency, 2. resistance to impacts of acid and alkali, high temperature and high humidity during the processing of PCB without delamination burst for moisture swelling, 3. adapting to the requirement of processing and installation at high temperatures, 4. good flame retarding security.

However, in the existing material used for print circuit baseboards, binders which are mainly epoxy resin are widely used. Ordinary epoxy resin circuit baseboards (FR-4 copper-clad laminates) generally have high dielectric constant and dielectric dissipation tangent (dielectric constant is 4.4, dielectric dissipation tangent is about 0.02), the high-frequency characteristics of which is not sufficient and cannot meet the requirement of the high-frequency signal. In order to make the requirement as much as possible, researchers in the art modified epoxy resin by using a curing agent with low polarity such as styrene maleic anhydride copolymer (SMA) or other low-polarity curing agent to improve its high-frequency dielectric property and thermal resistance. Further, in order to achieve good flame retardancy, researchers in the art used brominated epoxy resin, which is synthesized based on TBBPA (Tetrabromobisphenol A) to make circuit baseboards have good flame retardancy.

These research results are further discussed as follows.

BE627887 discloses an epoxy resin composition using styrene maleic anhydride copolymer (SMA, structural formula shown below) as crosslinking agent of the epoxy resin. The disadvantage of this epoxy resin composition is poor thermal stability, making it unsuitable for application in base material copper-clad laminates of multi-layer printed circuit board (PCB).

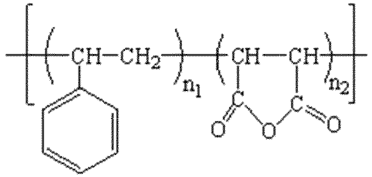

US6509414 uses FR-4 epoxy resin, styrene/maleic anhydride copolymer, brominated epoxy resin synthetized by tetrabromobisphenol-A and tetrabromobisphenol-A (TBBPA) to produce copper-clad laminates. US6509414 has put forward that the FR-4 epoxy resin refers to brominated epoxy resin synthetized by tetrabromobisphenol-A and bisphenol-A epoxy resin, so that US6509414 has mainly put forward using brominated epoxy resin synthetized by tetrabromobisphenol-A to produce copper-clad laminates. Although in the present patent, tetrabromobisphenol-A was coordinated with styrene/ maleicanhydride copolymer to comprise a mixed curing agent for overcoming the disadvantage of low glass transition temperature, when styrene/ maleic anhydride copolymer was applied as epoxy resin curing agent alone. However, because there are two hydroxyls with great polarity in the molecular structure of tetrabromobisphenol-A, the instruction of tetrabromobisphenol-A deteriorates the dielectric performance of the system to some degree. In addition, because the C-Br bond in the molecular structure of tetrabromobisphenol-A has low dissociation energy, it begins to produce thermal decomposition at about 200 °C, releasing small molecules gas, having poor thermal stability, and resulting in that the subsequent processing of PCB baseboard over 260°C is prone to delamination explosion and cracking, and having the risk of circuit failure.

US6667107 uses difunctional cyanate and autopolymers thereof, styrene maleic anhydride and derivatives thereof, and epoxy resin to produce a copper-clad laminate composition with low dielectric constant and low dielectric dissipation factor. Although the copper-clad laminate composition uses cyanate resin as well as styrene maleic anhydride and derivatives thereof together to improve glass transition temperature of the epoxy resin system, and having great high-frequency dielectric performances. However, there are anhydride groups in the molecule structure of the styrene maleic anhydride copolymer used in the system, the anhydride groups can produce carboxyl groups with bad thermal stability and bad thermal and moisture resistance, and it is coordinated with cyanate with bad thermal and moisture resistance, resulting in further deteriorating thermal and moisture resistance. Although the thermal and moisture resistance is improved to some extent by adding epoxy resin, the improvement was limited and cannot eliminate fundamentally. So during the processing of PCB, the baseboard material is easy to be delamination explosion for moisture erosion, and product qualification rate is very low.

JP2012012534, CN101967264, CN101967265, CN102443138 and CN102504201 employ active esters as curing agents of epoxy resin to produce PCB baseboards, which have good dielectric performance.

CN101643571 and CN101643572 produce copper-clad laminates using the scheme without adding SMA. US-A-201170278052 discloses a thermosetting resin composition comprising a phosphorous-containing epoxy resin, styrene -maleic anhydride copolymer,polymethylphosphonate as a flame retarder and 2-methylimidazole as a curing agent.

### Detailed description of the invention

In order to solve the problems above, an object of the present invention lies in providing a thermosetting epoxy resin composition containing SMA, and the resin composition has good thermal stability and thermal and moisture resistance, low dielectric constant and dielectric dissipation tangent and good flame retardancy.

The thermosetting epoxy resin composition of the present invention comprises: an epoxy resin other than brominated epoxy resin, a styrene maleic anhydride copolymer and an additive flame retardant.

According to the present invention, the epoxy resin used is an epoxy resin other than brominated epoxy resin. As is known to all, ordinary epoxy copper-clad laminates mainly employ tetrabromobisphenol-A epoxy resin to obtain flame retardancy needed for circuit base materials. However, after researching the inventors have found that, if either tetrabromobisphenol-A or tetrabromobisphenol-A epoxy resin is used in the thermosetting composition, multi-layered PCB is very prone to be delamination explosion. The analysis reason is that, the dissociation energy of C-Br bond in tetrabromobisphenol-A is too low to thermal decompose at about 200 °C, and releasing small molecule gases like HBr etc., while the lead-free technology commonly used in PCB processing currently has to operate at 260 °C for Wave soldering/Reflow soldering, at such high temperature, the circuit baseboard, which is mainly tetrabromobisphenol-A epoxy resin, has the defect that the multi-layered PCB is very prone to be delamination explosion because of gas releasing, so that the circuit board scrap rate increases.

After researching the inventors have also found that, when using styrene maleic anhydride copolymer (SMA) as a curing agent of tetrabromobisphenol-A epoxy resin, the defects of delamination explosion increases.

Preferably, the thermosetting epoxy resin further comprises active ester. After researching the inventors have found that, when the active ester is coordinated with SMA as the curing agent of the brominated epoxy resin together, the probability of delamination explosion of PCB baseboard decreases, furthermore, when coordinated with an epoxy resin other than brominated epoxy resin, the result is better. The structure of the active ester itself has few functional groups, and has low chemical reactivity. To make the epoxy resin to be crosslinked and cured sufficiently, it requires a large amount of active ester, and high curing temperature as well as long curing time while curing. In addition, the thermosetting composition using a large amount of active ester as a curing agent of epoxy resin has low glass transition temperature and increased CTE (coefficient of thermal expansion). However, it can obtain good improvement when the active ester curing agent is coordinated with SMA.

In the study, the inventors also found that when the active ester curing agent is coordinated with SMA, it can further reduce dielectric dissipation tangent of PCB base materials, which can be reduced from the original 0.0012 ∼ 0.009 to 0.004 ∼ 0.007, compared to using SMA alone.

Preferably, the styrene maleic anhydride copolymer has the following structural formula: 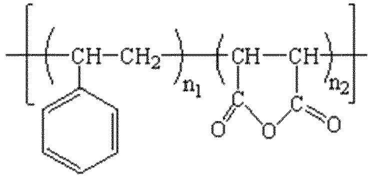 n₁:n₂=0.8∼19:1, for example 1:1, 2:1, 3:1, 4:1, 5:1, 6:1, 7:1, 8:1, 9:1, 12:1, 15:1, 17:1, 18:1, preferred to be 1∼15:1, and further preferred to be 1∼12:1.

Preferably, the number average molecular weight of the styrene maleic anhydride copolymer is 1000∼50000, preferred to be 1500∼45000, and further preferred to be 2000∼40000.

Except brominated epoxy resin, an epoxy resin having two or more epoxy groups in one molecular resin can also achieve the present invention. Examples are such as glycidyl ether epoxy resin, glycidyl ester epoxy resin, glycidyl amine epoxy resin, linear aliphatic epoxy resin, and alicyclic epoxy resin except brominated epoxy resin. The glycidyl ester epoxy resin can be terephthalic acid diglycidyl ester, tetrahydrophthalic acid diglycidyl ester, and hexahydrophthalic acid diglycidyl ester, etc. Glycidyl amine epoxy resin can be 4,4-diaminodiphenyl methane tetraglycidyl amine (TGDDM) and triglycidyl-p-aminophenol (TGPAP), etc. Alicyclic epoxy resin can be ERL-4221, ERL-4221D and ERL-4299 from Dow Chemical Company. The epoxy resin can be used singly, and can also be mixed used.

Preferably, the epoxy resin is one or a mixture of at least two selected from the following epoxy resins: 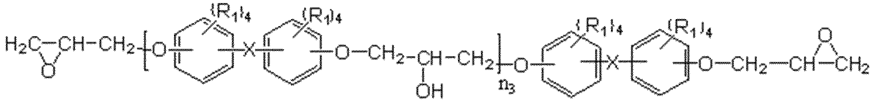 R₁ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₃ is any natural number; X is anyone selected from -CH₂-,-O-, -CO-, -SO₂-, -S-, -CH(C₆H₅)-, -C(C₆H₅)₂-, -CH(CH₃)-, -C(CH₃)₂-, or 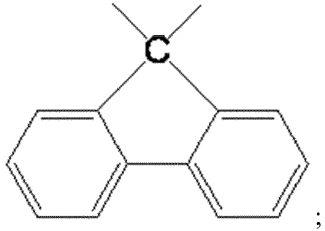 or 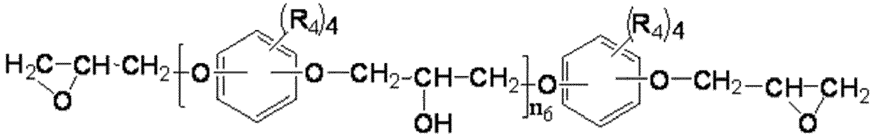 R₄ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₆ is any natural number;
or, one of phenol novolac epoxy resin, cresol novolac epoxy resin, bisphenol-A novolac epoxy resin, bisphenol-F epoxy resin, dicyclopentadiene epoxy resin, biphenyl epoxy resin, resorcinol phenol epoxy resin, naphthalene epoxy resin, phosphorus-containing epoxy resin, silicon-containing epoxy resin, glycidyl amine epoxy resin, alicyclic epoxy resin, polyethylene glycol epoxy resin, tetraphenol ethane tetraglycidyl ether, triphenyl glycidyl ether methane , or a mixture of at least two thereof. The mixture is such as a mixture of methyl phenol novolac epoxy resin and tetraphenol ethane tetraglycidyl ether, a mixture of triphenyl glycidyl ether methane and polyethylene glycol epoxy resin, a mixture of resorcinol phenol epoxy resin and alicyclic epoxy resin, a mixture of naphthalene epoxy resin and biphenyl epoxy resin, or a mixture of bisphenol-F epoxy resin and bisphenol-A epoxy resin, e.g. bisphenol-A novolac epoxy resin.

Preferably, the epoxy resin is one or a mixture of at least two selected from the epoxy resin having the following structure: 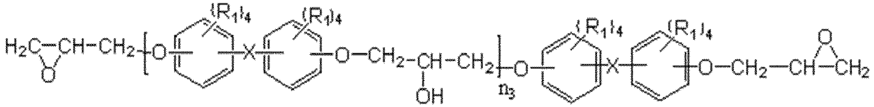 R₁ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₃ is any natural number; X is anyone selected from -CH₂-, -O-, -CO-, -SO₂-, -S-, -CH(C₆H₅)-, - C(C₆H₅)₂-, -CH(CH₃)-, - C(CH₃)₂-, or 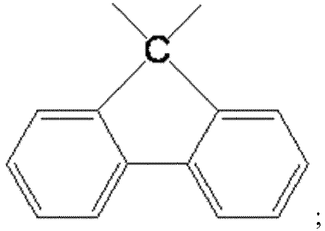 or, 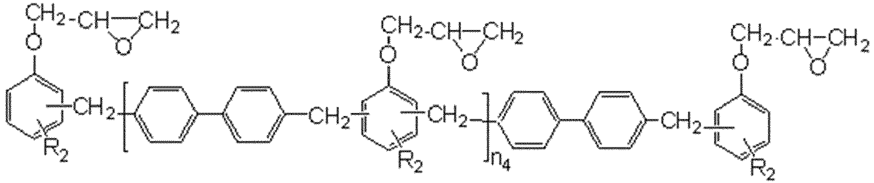 R₂ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n4≤20, and n₄ is an integer;
or, 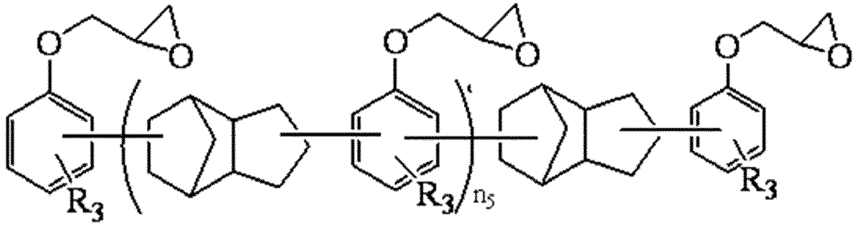 R₃ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n₅≤20, and n₅ is an integer;
or, 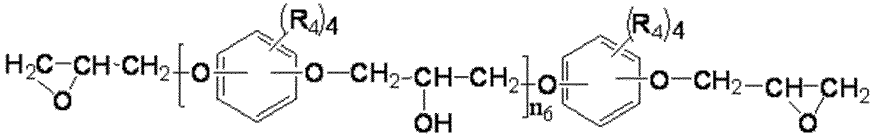 R₄ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₆ is any natural number; 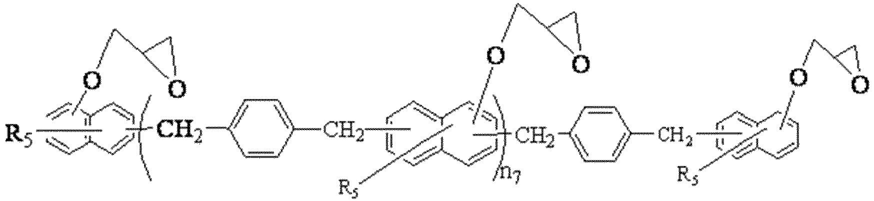 R₅ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n₇≤20, and n₇ is an integer;

Preferably, the active ester has the following structure: 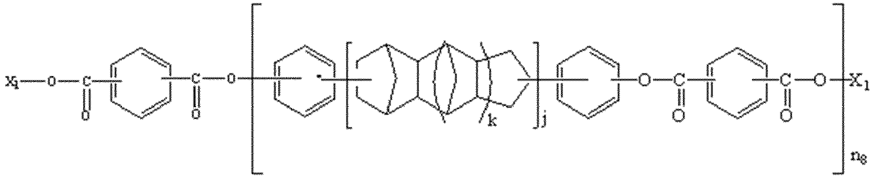 X₁ is a phenyl group or naphthyl group, j is 0 or 1, n₈ is 0.25∼1.25.

Preferably, the proportion of the active ester is 3∼40wt% of thermosetting resin composition, e.g. 5wt%, 7wt%, 9wt%, 11wt%, 15wt%, 17wt%, 19wt%, 23wt%, 25wt%, 27wt %, 29wt%, preferred to be 5 ∼ 35%wt%, more preferred to be 8 ∼ 30wt%.
the mass ratio between the active ester and styrene maleic anhydride copolymer is 0.1 to 8: 1, e.g., 0.5:1, 1:1, 2:1, 3:1, 4:1, 5:1, 6:1, 7:1, preferred to be 0.5∼ 7: 1, more preferred to be 1 ∼ 6:1.
the molar ratio between the sum of ester group in active ester and anhydride group in styrene maleic anhydride copolymer, and epoxy group in epoxy resin is 1:0.5∼1.5, e.g. 1:0.6, 1:0.7, 1:0.8, 1:0.9, 1:1, 1:1.1, 1:1.2, 1:1.3, 1:1.4, preferred to be 1:0.6∼1.4, more preferred to be 1:0.8∼1.2, then a PCB baseboard with good comprehensive performance can be obtained.

The inventors also found, it is preferred to use organic additive flame retardant except tetrabromobisphenol-A, further preferred to be halogen flame retardant (except tetrabromobisphenol-A) or/and phosphorus flame retardant, and further preferred to be brominated flame retardant and/or phosphorus flame retardant, 5% thermal decomposition temperature of which is 300°C or more. The organic additive flame retardant mentioned above can be coordinated with inorganic flame retardant. The flame retardant provides good flame retardancy and thermal resistance in the thermosetting resin system.

Preferably, the brominated flame retardant is one selected from decabromodiphenyl ether, brominated polystyrene, brominated polycarbonate, decabromodiphenyl ethane or ethylene bis-tetrabromo phthalimide, or a mixture of at least two thereof. The mixture is such as a mixture of ethylene bis-tetrabromo phthalimide and decabromodiphenyl ethane, a mixture of brominated polycarbonate and brominated polystyrene, a mixture of decabromodiphenyl ether and ethylene bis-tetrabromo phthalimide, or a mixture of decabromodiphenyl ethane, brominated polycarbonate and brominated polystyrene. The brominated flame retardant can be used alone, or as a mixture which can obtain significant synergistic effects.

Preferably, the phosphorus flame retardant is anyone selected from tri(2,6-dimethyl phenyl)phosphine, resorcinol bis[di(2,6-dimethyl phenyl)phosphate], resorcinol tetraphenyl diphenylphosphate, triphenyl phosphate, bisphenol-A bis(diphenyl phosphate), phosphazene flame retardant, 10-(2,5-dihydroxy phenyl)-10-hydro-9-oxa-10-phosphaphenanthrene-10-oxide, 10-(2,5-dihydroxy naphthyl)-10-hydro-9-oxa-10-phosphaphenanthrene-10-oxide or 9,10-dihydro-9-oxa-10-phosphaphenanthrene-10-oxide flame retardant, or a mixture of at least two thereof.

The inorganic flame retardant, which is coordinated with organic additive flame retardant, is one selected from red phosphorus, aluminum hydroxide, magnesium hydroxide or antimony trioxide, or a mixture of at least two thereof. The mixture is such as a mixture of antimony trioxide and magnesium hydroxide, a mixture of aluminum hydroxide and red phosphorus, a mixture of antimony trioxide and aluminum hydroxide, a mixture of magnesium hydroxide and red phosphorus, a mixture of antimony trioxide, magnesium hydroxide and aluminum hydroxide, or a mixture of red phosphorus, antimony trioxide, magnesium hydroxide and aluminum hydroxide.

Preferably, the proportion of the additive flame retardant is 5∼30wt% of thermosetting resin composition, e.g. 7wt%, 9wt%, 11wt%, 13wt%, 15wt%, 17wt%, 19wt%, 21wt%, 23wt%, 25wt%, 27wt %, 29wt%, preferred to be 10 ∼ 30% wt%, more preferred to be 10 ∼25wt%.

Preferably, the thermosetting resin also includes filler.

Using the filler can reduce thermal expansion coefficient of the thermosetting resin composition in order to reduce the probability of delamination explosion of laminates made of thermosetting resin composition as well as printed circuit boards, meanwhile, being coordinated with additive flame retardant except tetrabromobisphenol-A can also keep the dielectric performances of the composition from being deteriorated.

Preferably, the filler is anyone selected from aluminum hydroxide, magnesium hydroxide, kaolin, talc, hydrotalcite, calcium silicate, beryllia, boron nitride, glass powder, silica powder, zinc borate, aluminum nitride, silicon nitride, silicon carbide, magnesia, zirconia, mullite, titanium dioxide, potassium titanate, hollow glass beads, potassium titanate fibers, silicon carbide single crystal fibers, silicon nitride fibers, alumina whiskers, short glass fibers, polytetrafluoroethylene powder, polyphenyl sulfide powder, polystyrene powder, or a mixture of at least two thereof. The mixture is such as a mixture of aluminum hydroxide and magnesium hydroxide, a mixture of kaolin and hydrotalcite, a mixture of calcium silicate and beryllia, a mixture of boron nitride and glass powder, a mixture of silica powder and zinc borate, a mixture of aluminum nitride and silicon nitride, a mixture of silicon carbide and magnesia, a mixture of zirconia and mullite, a mixture of titanium dioxide and potassium titanate, a mixture of hollow glass beads and potassium titanate whiskers, a mixture of silicon carbide single crystal fibers and nitride whiskers, a mixture of alumina whiskers and short glass fibers, or a mixture of polytetrafluoroethylene powder and polyphenyl sulfide powder. The filler can be used alone, or as a mixture which can obtain significant synergistic effects.

Preferably, the proportion of the filler is 5∼60wt% of thermosetting resin composition, e.g. 12wt%, 15wt%, 18wt%, 21wt%, 25wt%, 27wt%, 32wt%, 35wt%, 38wt%, 42wt%, 45wt%, 48wt%, 52wt%, 54wt%, 56wt%, 58wt%, preferred to be 15∼55wt%, further preferred to be 20∼40wt%.

Catalyst and/or solvent can be added into the thermosetting resin composition of the present invention.

Preferably, the catalyst is selected from one of tertiary amine, tertiary phosphine, quaternary ammonium salt, quaternary phosphonium salt and imidazole compound, or a mixture of at least two thereof.

Preferably, the tertiary amine is anyone selected from triethylamine, tributylamine, dimethylaminoethanol, N,N-dimethyl-pyridine amine or benzyl dimethylamine, or a mixture of at least two thereof.

Preferably, the tertiary phosphine is selected from triphenylphosphine or/and trialkylphosphine.

Preferably, the quaternary ammonium salt is anyone selected from tetramethylammonium bromide, tetramethyl ammonium chloride, tetramethyl ammonium iodide, benzyl trimethyl ammonium chloride, benzyl triethyl ammonium chloride or hexadecyl trimethyl ammonium bromide, or a mixture of at least two thereof. The mixture is such as a mixture of hexadecyl trimethyl ammonium bromide and benzyl triethyl ammonium chloride, a mixture of benzyl trimethyl ammonium chloride and tetramethyl ammonium iodide, a mixture of tetramethyl ammonium chloride and tetramethylammonium bromide, a mixture of hexadecyl trimethyl ammonium bromide, benzyl triethyl ammonium chloride and benzyl trimethyl ammonium chloride, or a mixture of tetramethyl ammonium iodide, tetramethyl ammonium chloride and tetramethylammonium bromide.

Preferably, the quaternary phosphonium salt is anyone selected from tetrabutylphosphonium chloride, tetrabutylphosphonium bromide, tetrabutylphosphonium iodide, tetraphenylphosphonium chloride, tetraphenylphosphonium bromide, tetraphenylphosphonium iodide, ethyl-triphenylphosphonium chloride, propyl-triphenylphosphonium chloride, propyl-triphenylphosphonium bromide, propyl-triphenylphosphonium iodide, butyl-triphenylphosphonium chloride, butyl-triphenylphosphonium bromide, butyl-triphenylphosphonium iodide, or a mixture of at least two thereof. The mixture is such as a mixture of butyl-triphenylphosphonium chloride and propyl-triphenylphosphonium bromide, a mixture of propyl-triphenylphosphonium chloride and ethyl-triphenylphosphonium chloride, a mixture of tetraphenylphosphonium iodide and tetraphenylphosphonium bromide, a mixture of tetraphenylphosphonium chloride and tetrabutylphosphonium iodide, a mixture of tetrabutylphosphonium bromide and tetrabutylphosphonium chloride, or a mixture of butyl-triphenylphosphonium chloride, propyl-triphenylphosphonium chloride and tetraphenylphosphonium iodide.

Preferably, examples of an imidazole compound are one of 2-methylimidazole, 2-ethyl-4-methylimidazole, 2-phenyl imidazole, 2-undecyl imidazole, 1-benzyl-2-methylimidazole, 2-heptadecyl imidazole, 2-isopropyl imidazole, 2-phenyl-4-methylimidazole, 2-dodecyl imidazole or cyanoethyl-2-methylimidazole, or a mixture of at least two thereof. The mixture is such as a mixture of cyanoethyl-2-methylimidazole and 2-phenyl-4-methylimidazole, a mixture of 2-isopropyl imidazole and 2-heptadecyl imidazole, a mixture of 1-benzyl-2-methylimidazole and 2-undecyl imidazole, a mixture of 2-phenyl imidazole and 2-ethyl-4-methylimidazole, or a mixture of 2-methylimidazole and 2-heptadecyl imidazole.

The amount of catalyst used depends on the epoxy resin type, the curing agent type and the catalyst type. A principle for using the catalyst is that the gelation time of glue should not less than 120s. The amount of the catalyst of the present invention is 0.001 ∼ 5.0wt% based on the total amount of thermosetting resin composition, preferred to be 0.05∼4.Owt%, further preferred to be 0.05∼3.0wt%. Excessive amount (more than 5.0wt%) of the catalyst will result in a rapid reaction of the epoxy resin composition, having bad effects on the formation of by-product and the uniformity of transformation ratio in curing reaction. If the amount of the catalyst in composition is less than 0.001wt%, the reaction is too slow, and it is not conducive to the production of prepregs.

Preferably, the solvent is one selected from ketone, hydrocarbon, ether, ester or aprotic solvent, or a mixture of at least two thereof, preferred to be one of acetone, methyl ethyl ketone, methyl isobutyl ketone, toluene, xylene, methanol, ethanol, carbinol, ethylene glycol monomethyl ether, propylene glycol monomethyl ether, ethyl acetate, N, N-dimethylformamide or N, N- diethylformamide, or a mixture of at least two thereof. The solvent can be used alone, or as a mixture which can obtain significant synergistic effects. The amount of solvent added can be determined according to the viscosity of the selected resin, to gain the glue of epoxy resin with moderate viscosity for better curing, the specific addition amount will not be limited in the present invention.

Preferably, the thermosetting resin composition also comprises anyone of polyphenylene ether, cyanate ester resin or BT resin, or a mixture of at least two thereof.

Preferably, the cyanate ester resin is selected from any one or a mixture of at least two of the following monomers, or from any one or a mixture of at least two of prepolymers of the following monomers, or made from any one or a mixture of at least two of the following monomers and any one or a mixture of at least two of prepolymers of the following monomers, the monomers are bisphenol-A cyanate, 2,2-bis (cyanate phenyl) propane, bis (cyanate phenyl) ethane, bis (cyanate phenyl) methane, bis (4-cyanate-3,5-dimethylphenyl) methane, 2,2-bis(4-cyanate phenyl)hexafluoropropane, bis(4-cyanate phenyl) thioether, novolac cyanate or cyanate containing dicyclopentadiene structure.

According to the present invention, when the thermosetting resin composition comprises a polyphenylene ether (PPO), more excellent dielectric property and good processing property, thermal resistance as well as thermal and moisture resistance can be obtained.

Preferably, the thermosetting resin composition also comprises any one of dye, pigment, surfactant, leveling agent and ultraviolet absorber, or a mixture of at least two thereof.

The "comprises" of the present invention means, in addition to the mentioned components, other components may be also included, resulting in different characteristics of the thermosetting resin composition. Besides, the "comprises" of the present invention, can be replaced with a closed "is" or "composed of ......." Regardless the species of components comprised in the thermosetting resin of the present invention, the weight percentage of the components in the thermosetting resin is 100% except the solvent.

The resin composition in the present invention is used to prepare resin sheets, resin composite metal foils, prepregs, laminates, copper-clad laminates and printed wiring boards etc.

The second object of the present invention lies in providing an application of the above mentioned thermosetting resin composition in the preparation of resin sheets, resin composite metal foils and prepregs.

The method of preparing resin sheets using thermosetting resin composition in the present invention is listed below, but the method for preparing a resin sheet is not limited thereto. The thermosetting resin composition mentioned above is coated on a carrier film, which can be polyester film or polyimide film. The thickness of the carrier film is 5∼150µm, e.g. 10µm, 15µm, 20µm, 25µm, 30µm, 35µm, 40µm, 45µm, 50µm, 55µm, 60µm, 70µm, 80µm, 90µm, 100µm, 105µm, 110µm, 115µm. And then the carrier film coated with thermosetting resin composition is heated for 10 seconds to 30 minutes at 100∼250°C (such as 110°C, 120°C, 130°C, 140°C, 150°C, 160°C, 170°C, 180°C, 190°C, 200°C, 210°C, 220°C, 240°C) to form a sheet, for example heated for 30s, 60s, 3min, 5min, 8min, 11min, 15min, 18min, 21min, 24min, 27min, 29min. The thickness of formed resin sheet is 5∼100µm, e.g. 10µm, 15µm, 20µm, 25µm, 30µm, 35µm, 40µm, 45µm, 50µm, 55µm, 60µm, 70µm, 80µm, 90µm etc.

The method of preparing resin composite metal foils using thermosetting resin composition in the present invention is listed below, but the method for preparing a resin composite metal foil is not limited thereto. As the metal foil, one of copper, brass, aluminum or nickel or a mixture of at least two thereof can be used. the metal foil can also use an alloy containing the metals mentioned above. The thickness of the metal foil is 5-150µm, e.g., 10µm, 15µm, 20µm, 25µm, 30µm, 35µm, 40µm, 45µm, 50µm, 55µm, 60µm, 70µm, 80µm, 90µm, 100µm, 105µm, 110µm, 115µm. The mentioned thermosetting resin composition is applied onto the metal foil by manual or mechanical roller coating device. And then the metal foil coated with thermosetting resin composition is heated and dried, making the thermosetting resin composition in a semi-cured state (B-Stage). And then it is heated at a temperature of 100-250 °C (e.g. 110°C, 120°C, 130°C, 140°C, 150°C, 160°C, 170°C, 180°C, 190°C, 200°C, 210°C, 220°C, 240°C), for 10 seconds to 30 minutes (e.g., 30s, 60s, 3min, 5min, 8min, 11min, 15min, 18min, 21min, 24min, 27min, 29min) and cured, and the thickness of the resin layer of the formed resin composite metal is 1-150µm. The resin composite metal foil (RCC) obtained by this method can be used as inner or outer layers of the printed wiring board to increase the layer of printed wiring board.

The method of preparing prepregs using thermosetting resin composition in the present invention is listed below, but the method for preparing a prepreg is not limited thereto. The thermosetting resin composition glue is impregnated on the reinforcing material, and the prepreg impregnated with a thermosetting resin composition is heated and dried, making the thermosetting resin composition of the prepreg in a semi-cured stage (B-Stage), which can obtain prepregs. The heating temperature is 80∼250°C, e.g. 90°C, 100°C, 110°C, 120°C, 130°C, 140°C, 150°C, 160°C, 170°C, 180°C, 190°C, 200°C, 210°C, 220°C, 230°C, 240°C, and the heating time is 1∼30min, e.g. 3min, 5min, 7min, 10min, 13min, 16min, 19min, 22min, 25min, 28min, 29min. Wherein, the reinforcing material can be inorganic or organic materials. The inorganic materials are such as glass fiber, carbon fiber, boron fiber, metal or the like of the woven fabric or nonwoven fabric or paper. Wherein, the glass fiber cloth or the nonwoven fabric can be E-glass, Q-type cloth, NE cloth, D-type fabric, S-type cloth, high silica cloth etc. The organic fibers are woven, non-woven fabric or paper made from such as polyester, polyamine, polyacrylic acid, polyimide, aramid, polytetrafluoroethylene, syndiotactic polystyrene, etc. However, the reinforcing material is not limited thereto, and other reinforcing materials suitable for resin reinforcement can also implement the present invention. The resin content of the prepreg is 25 ∼ 70wt%.

The third object of the present invention lies in providing an application of resin sheets, resin composite metal foils and prepregs mentioned above in the preparation of laminates, metal-clad laminates and printed wiring boards, preferred to be the application of prepregs in the preparation of laminates, metal-clad laminates and printed wiring boards.

The laminates, metal-clad laminates and printed wiring boards can be prepared from resin sheets, resin composite metal foils and prepregs.

The method of preparing laminates using prepregs in the present invention is listed as follows: at least two layers of prepregs are stacked, and it is hot pressed at 130 ∼ 250°C, 3∼50kgf/cm² of pressure for 60 ∼ 240min to form a laminate. The hot pressing temperature is 130 ∼ 250°C, e.g. 140°C, 150°C, 160°C, 170°C, 180°C, 190°C, 200°C, 210°C, 220°C, 230°C, 240°C. The pressure is 3 ∼ 50kgf / cm², e.g. 5 kgf / cm², 8 kgf / cm², 11 kgf / cm², 14 kgf / cm², 17 kgf / cm², 24 kgf / cm², 28 kgf / cm², 32 kgf / cm², 37 kgf / cm², 42 kgf / cm², 45 kgf / cm², 48 kgf / cm². The pressing time is 60 ∼ 240min, such as 70min, 90min, 110min, 130min, 150min, 170min, 190min, 210min, 230min, 240min.

The method of preparing metal-clad laminates using prepregs in the present invention is listed as follows: one or more prepregs are cut into a certain size for stacking and sent to a laminating equipment for lamination. Meanwhile, the metal foil is placed on one or both sides of the prepreg, and the prepreg is pressed to form metal-clad laminate through hot pressing. As the metal foil, one of copper, brass, aluminum or nickel or a mixture of at least two thereof can be used, the metal foil can also use an alloy containing the metals mentioned above. As pressing conditions of the laminate, an appropriate laminating curing condition is selected according to actual conditions of epoxy resin composition. If the compacting pressure is too low, the gap will exist in the laminate, which can lower its electrical properties; if the laminating pressure is too high, the internal stress in the laminate may be too much, decreasing the dimensional stability of the laminate. And appropriate pressure which satisfies molding is required for laminating the board to achieve the requirements. The general guidelines for conventional laminate are as follows, the laminating temperature is 130∼250 °C, pressure: 3-50kgf / cm², hot pressing time: 60-240min. The hot pressing temperature is 130 ∼ 250°C, e.g. 140°C, 150°C, 160°C, 170°C, 180°C, 190°C, 200°C, 210°C, 220°C, 230°C, 240°C. The pressure is 3∼50kgf/cm², e.g.5kgf/cm², 8kgf/cm², 11kgf/cm², 14kgf/cm², 17kgf/cm², 24kgf/cm², 28kgf/cm², 32kgf/cm², 37kgf/cm², 42kgf/cm², 45kgf/cm², 48kgf7cm². The hot pressing time is 60 ∼ 240min, such as 70min, 90min, 110min, 130min, 150min, 170min, 190min, 210min, 230min, 240min.

The resin sheets, resin composite metal foils, prepregs and metal-clad laminates can be used to prepare printed wiring board or complex multilayer printed circuit by an addition or a subtractive method. The method of preparing printed wiring boards using prepregs in the present invention is listed below: using the metal-clad laminate prepared through the method mentioned above to make printed wiring board or complex multilayer printed circuit by an addition or a subtractive method.

The thermosetting resin composition glue is that the composition is added with solvent, and the solvent is adjusted to obtain the liquid glue.

The thermosetting resin composition of the present invention may be used for preparing resin sheets, resin composite metal foils, prepregs, laminates, metal-clad laminates and printed wiring boards, and also can be used for preparing adhesive agents and coatings, and also can be used in construction, aviation, shipbuilding, automobile industry.

Compared with the prior art, the present invention has the following advantages:
The present invention selects an epoxy resin except brominated epoxy resin, uses SMA and active esters as the curing agent, and selects additive flame retardant except tetrabromobisphenol-A, which significantly reduce the probability of delamination explosion of PCB baseboards, and overcome the deterioration of dielectric performances caused by introducing tetrabromobisphenol A. The obtained resin composition has good thermal stability and thermal and moisture resistance, dielectric constant and low dielectric dissipation tangent, and good flame retardancy.

### Examples

In order to better illustrate the present invention and facilitate understanding the technical solutions of the present invention, the typical but non-limiting examples of the present invention are as follows:

### Example 1:

20.5 parts of SMA 3000 styrene maleic anhydride copolymer, 12 parts of active ester, 32.5 parts of N695, 15 parts of BT93 (ethylene bis-tetrabromo phthalimide), 20 parts of SC2050MB and catalyst 2-MI(2-methylimidazole) were added, and MEK(butanone) was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA, active ester, N695, BT93 and SC2050MB is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Example 2:

27.5 parts of EF60, 5 parts of active ester, 32.5 parts of HP7200, 15 parts of BT93, 20 parts of SC2050MB and catalyst 2-MI were added, and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of EF60, active ester, HP7200, BT93 and SC2050MB is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Example 3:

5 parts of SMA EF60 , 27.5 parts of active ester, 32.5 parts of HP7200, 15 parts of BT93, 20 parts of SC2050MB and catalyst 2-MI were added, and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of EF60, active ester, HP7200, BT93 and SC2050MB is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Example 4:

15 parts of SMA 4000 styrene maleic anhydride copolymer, 10 parts of active ester, 15 parts of HF-10, 25 parts of N695, 15 parts of HP3010, 20 parts of SC2050MB and catalyst 2-MI as well as zinc caprylate were added, and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA, active ester, HF-10, N695, BT93 and SC2050MB is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Example 5:

30 parts of SMA 1000 styrene maleic anhydride copolymer, 3 parts of active ester, 32 parts of EPPN501H epoxy resin, 30 parts of SAYTEX8010 decabromodiphenyl ethane, 5 parts of Kaolin and catalyst N,N-dimethyl- pyridine amine were added, and toluene was used to dissolve the compounds, and a glue with suitable viscosity was prepared. The glue was infiltrated by polyester nonwoven fabric, and was placed in an oven at 155 °C to remove solvent, and a prepreg sample of B-stage was obtained. The total amount of SMA, active ester, EPPN501H epoxy resin, decabromodiphenyl ethane and Kaolin is 100 parts by weight. Respective properties are shown in Table 1.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes.

### Example 6:

5 parts of SZ08250 styrene maleic anhydride copolymer, 40 parts of active ester, 11.5 parts of AG-80 epoxy resin, 28 parts of hollow glass beads, 5 parts of SPB100, 10.5 parts of Teflon powder and catalyst butyl-triphenylphosphonium chloride were added, and DMF was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA, active ester, AG-80 epoxy resin, hollow glass beads, SPB100 and Teflon powder is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Comparative Example 1:

21 parts of SMA 3000 styrene maleic anhydride copolymer, 18 parts of EPICLON153, 15 parts of tetrabromobisphenol-A, 46 parts of DER530 were added. And catalyst 2-MI was added as well and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA, active ester and tetrabromobisphenol-A is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Comparative Example 2:

40 parts of SMA 3000 styrene maleic anhydride copolymer, 60 parts of DER530 were added. And catalyst 2-MI was added as well and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA and DER530 is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Comparative Example 3:

40 parts of active ester, 60 parts of N695and catalyst 2-MI were added, and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of active ester and N695 is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

### Comparative Example 4:

3 parts of SMA 3000 styrene maleic anhydride copolymer, 27.5 parts of active ester, 34.5 parts of N695, 15 parts of BT93, 20 parts of SC2050MB and catalyst 2-MI as well as zinc caprylate were added, and MEK was used to dissolve the compounds, and a glue with suitable viscosity was prepared. The glue was infiltrated by 2116 electron-grade glass cloth, and was placed in an oven at 155 °C to remove solvent, and a prepreg sample of B-stage was obtained. The total amount of SMA, active ester, N695, BT93 and SC2050MB is 100 parts by weight.

Eight prepregs and two pieces of electrolytic copper foil of an ounce were laminated together through a hot press to obtain double-sided copper-clad laminates. Laminating conditions were as follows: 1. when the material temperature was 80 to 120 °C, the rate of rising temperature was controlled to be 1.0 to 3.0 °C / min; 2. the pressure was set to be 20kg / cm²; 3, the curing temperature was 190 °C, and was maintained for 90 minutes. Respective properties are shown in Table 1.

**Table 1**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| DER530 | | | | | | | 46 | 60 | | |
| tetrabromobisphenol-A | | | | | | | 15 | | | |
| N695 | 32.5 | | | 25 | | | | | 60 | 34.5 |
| EPICLON153 | | | | | | | 18 | | | |
| HP7200 | | 32.5 | 32.5 | | | | | | | |
| AG-80 | | | | | | 11.5 | | | | |
| EPPON501H | | | | | 32 | | | | | |
| active ester | 12 | 5 | 27.5 | 10 | 3 | 40 | | | 40 | 27.5 |
| SMA1000 | | | | | 30 | | | | | |
| SZ08250 | | | | | | 5 | | | | |
| SMA4000 | | | | 15 | | | | | | |
| SMA3000 | 20.5 | | | | | | 21 | 40 | | 3 |
| SMAEF60 | | 27.5 | 5 | | | | | | | |
| HF-10 | | | | 15 | | | | | | |
| SAYTEX8010 | | | | | 30 | | | | | |
| BT93 | 15 | 15 | 15 | | | | | | | 15 |
| HP3010 | | | | 15 | | | | | | |
| SPB100 | | | | | | 5 | | | | |
| SC2050MB | 20 | 20 | 20 | 20 | | | | | | 20 |
| Kaolin | | | | | 5 | | | | | |
| hollow glass beads | | | | | | 28 | | | | |
| PTFE powder | | | | | | 10.5 | | | | |
| N,N-dimethyl- pyridine amine | | | | | q.s. | | | | | |
| butyl-triphenylphosphonium chloride | | | | | | q.s. | | | | |
| Zinc naphthenate | | | | q.s. | | | | | | |
| 2-MI | q.s. | q.s. | q.s. | q.s. | | | q.s. | q.s. | q.s. | q.s. |
| toluene | | | | | 80 | | | | | |
| DMF | | | | | | 80 | | | | |
| MEK | 70 | 70 | 70 | 70 | | | 80 | 30 | 90 | 90 |
| Tg (degree) | 171 | 165 | 158 | 208 | 187 | 175 | 168 | 138 | 135 | 133 |
| dielectric constant | 3.9 | 3.7 | 3.6 | 3.6 | 3.6 | 3.7 | 4.1 | 4.0 | 3.9 | 3.9 |
| dielectric dissipation factor | 0.004 | 0.006 | 0.005 | 0.005 | 0.0065 | 0.004 | 0.013 | 0.015 | 0.0085 | 0.006 |
| solder dipping | good | good | good | good | good | good | foaming | lamination | good | good |
| PCT water absorption (wit%) | 0.28 | 0.32 | 0.27 | 0.26 | 0.28 | 0.29 | 0.40 | 0.38 | 0.38 | 0.33 |
| solder dipping after PCT (S) | >300 | >300 | >300 | >300 | >300 | >300 | >300 | 160 | >300 | >300 |
| flame retardancy | V0 | V0 | V0 | V0 | V0 | V0 | V0 | V0 | Combustion to clamp | V0 |
| Td | 378 | 389 | 378 | 382 | 381 | 378 | 339 | 338 | 386 | 376 |
| CTE (ppm,>Tg) | 213 | 220 | 230 | 225 | 232 | 226 | 265 | lamination | 280 | 231 |

| | | | | | | | | | | |
|---|---|---|---|---|---|---|---|---|---|---|
| Note 1: The contents of each component in table are noted by parts by weight. DER530 is bisphenol-A brominated bifunctional epoxy resin of DOW. N695is o-cresol novolac epoxy resin of DIC. EPICLON153 is tetrabromobisphenol-A modified brominated epoxy resin of DIC. HP7200 is dicyclopentadiene epoxy resin of DIC. AG-80 is the epoxy produced by Shanghai Synthetic Material Research Institute. EPPON501H is trifunctional epoxy resin produced by Nippon Kayaku. SZ08250 is styrene maleic anhydride copolymer produced by Polyscope Polymer Company. SMA1000 is styrene maleic anhydride copolymer produced by Sartomer. SMA3000 is styrene maleic anhydride copolymer produced by Sartomer. SMA4000 is styrene maleic anhydride copolymer produced by Sartomer. SMAEF60 is styrene maleic anhydride copolymer produced by Sartomer. HF-10: is bisphenol A bifunctional cyanate produced by Huifeng Electronics Co., Ltd. SC2050MB is silica produced by admatechs Co. BT93 is ethylene bis-tetrabromo phthalimide produced by Albemarle. HP3010 is brominated polystyrene produced by Albemarle. SPB100 is phosphazene flame retardants produced by Otsuka Chemical Co., Ltd. SAYTEX8010 is decabromodiphenyl ethane produced by Albemarle. Kaolin is produced by BASF. Hollow glass bead is produced by 3M. PTFE powder is produced by Shanghai 3F New Materials Co., Ltd.; Note 2: The glass transition temperature (Tg): measured by DSC according to the DSC test method specified in IPC-TM-650 2.4.25. Peel strength is tested in accordance with the experimental condition of "after thermal stress" in IPC-TM-650 2.4.8. The dielectric constant and dielectric dissipation factor: following the procedure specified in IPC-TM-650 2.5.5.9. Evaluation of solder dipping : the copper-clad laminate is immersed in tin-furnace at a temperature of 288 °C for 20 seconds and then cooled to room temperature, and then dipped into the tin-furnace and repeated for 5 times, the solder dipping is evaluated by observing its appearance. PCT water absorption test: the copper-clad laminate is immersed in a copper etching solution to remove the copper foil surface and the baseboard is evaluated. The baseboard is placed in a pressure cooker at 121 °C and 2 atm for 2 hours, and then the water absorption of the baseboard is measured. Evaluation of solder dipping after PCT: the copper-clad laminate is immersed in a copper etching solution to remove the copper foil surface and the baseboard is evaluated. The baseboard is placed in a pressure cooker at 121 °C and 2 atm for 2 hours, and then immersed in a tin-furnace at a temperature of 288 °C, and the corresponding time is recorded when the baseboard appears to blister or split. The evaluation is ended when no blistering or splitting appears after the baseboard is put in the tin-furnace over 5 minutes. Td: the copper-clad laminate is immersed in a copper etching solution to remove the copper foil surface and the baseboard is evaluated. The baseboard is tested by thermo gravimetric analyzer (TGA), temperature rises with 10°C/min in nitrogen, and the temperature is recorded when 5% weight is lost. CTE: tested with TMA, the rising speed of temperature is 10°C/min. | | | | | | | | | | |

Flammability is tested according to the method of UL-94.

As seen from Table 1, Examples 1-6 of the present invention have low dielectric constant, low dielectric dissipation factor and heat resistance, solder dipping, water resistance, thermal and moisture resistance are all excellent. On the other hand, Comparative Example 1 has higher dielectric dissipation factor and higher coefficient of thermal expansion (CTE); Comparative Example 2 occurred delamination measuring CTE; Comparative Example 3 has higher CTE and lower glass transition temperature, and the flammability cannot reach V0 level; Comparative Example 4 has lower glass transition temperature.

The applicant states that the present invention illustrates detailed method of the present invention through the examples above, but it is not limited thereto, i.e., it does not mean the present invention must be reached depending on the detailed method above. Those skilled in the art should understand, any improvement to the present invention, equivalent replacement for each material of the product of the present invention, addition of auxiliary components and selection of specific modes all fall into the protection scope and disclosure scope of the present invention.

## Claims

1. A thermosetting resin composition, **characterized in that** the thermosetting resin composition comprises: an epoxy resin other than brominated epoxy resin, a styrene maleic anhydride copolymer and an additive flame retardant; the thermosetting resin composition also comprises active ester; the mass ratio between the active ester and styrene maleic anhydride copolymer is 0.1 to 8:1, and the molar ratio between the sum of ester group in active ester and anhydride group in styrene maleic anhydride copolymer, and epoxy group in epoxy resin is 1:0.5-1.5.

2. The thermosetting resin composition according to claim 1, **characterized in that** the styrene maleic anhydride copolymer has the following structural formula: 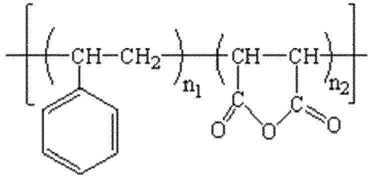 n₁:n₂=0.8-19:1.

3. The thermosetting resin composition according to claim 1, **characterized in that** the number-average molecular weight of the styrene maleic anhydride copolymer is 1000-50000.

4. The thermosetting resin composition according to claim 1, **characterized in that** the epoxy resin is one or a mixture of at least two selected from the following epoxy resins: 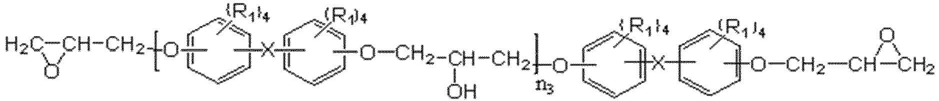 R₁ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₃ is any natural number; X is anyone selected from -CH₂-, -O-, -CO-, -SO₂-, -S-, -CH(C₆H₅)-, -C(C₆H₅)₂-, -CH(CH₃)-, -C(CH₃)₂-, or 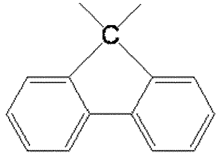 or 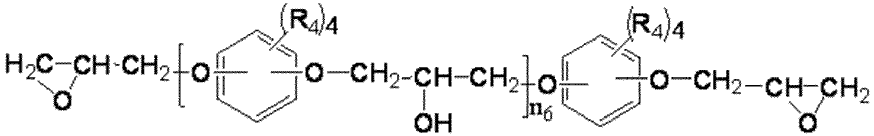 R₄ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₆ is any natural number;
or, one of phenol novolac epoxy resin, cresol novolac epoxy resin, bisphenol-A novolac epoxy resin, bisphenol-F epoxy resin, dicyclopentadiene epoxy resin, biphenyl epoxy resin, resorcinol phenol epoxy resin, naphthalene epoxy resin, phosphorus-containing epoxy resin, silicon-containing epoxy resin, glycidyl amine epoxy resin, alicyclic epoxy resin, polyethylene glycol epoxy resin, tetraphenol ethane tetraglycidyl ether, triphenyl glycidyl ether methane , or a mixture of at least two thereof.

5. The thermosetting resin composition according to claim 1, **characterized in that** the epoxy resin is one or a mixture of at least two selected from epoxy resins with the following structure: 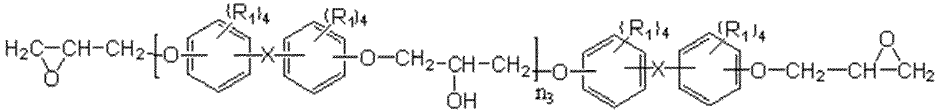 R₁ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₃ is any natural number; X is anyone selected from -CH₂-, -O-, -CO-, -SO₂-, -S-, -CH(C₆H₅)-, -C(C₆H₅)₂-, -CH(CH₃)-, -C(CH₃)₂-, or 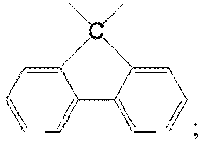 or, 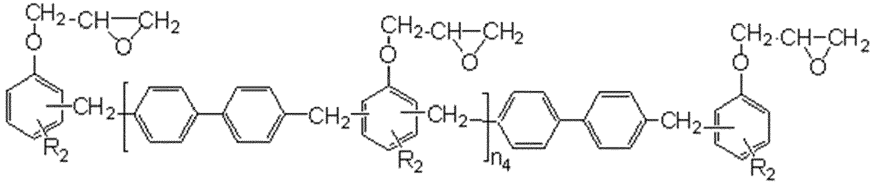 R₂ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n₄≤20, and n₄ is an integer;
or, 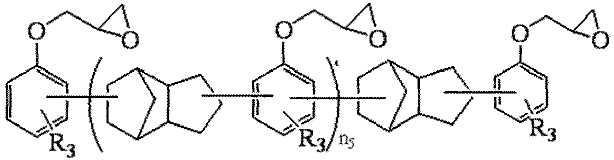 R₃ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n₅≤20, and n₅ is an integer;
or, 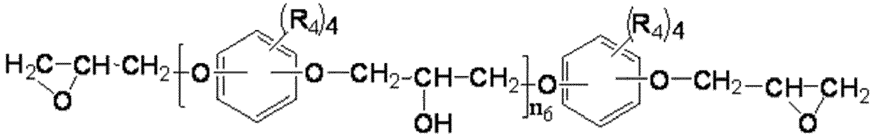 R₄ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; n₆ is any natural number; 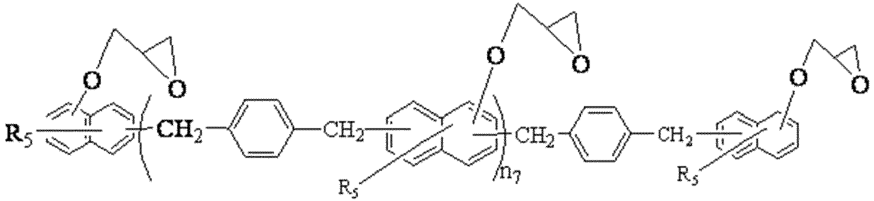 R₅ is selected from a hydrogen atom, a substituted or unsubstituted C1-C8 linear alkyl group, a substituted or unsubstituted C1-C8 branched alkyl group, a substituted or unsubstituted alicyclic alkyl group, a substituted or unsubstituted C1-C10 alkoxy group, a substituted or unsubstituted phenyl group; 0≤n₇≤20, and n₇ is an integer.

6. The thermosetting resin composition according to claim 1, **characterized in that** (i) the active ester has the following structure: 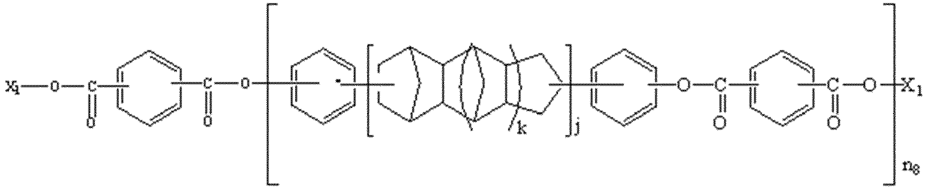 X₁ is a phenyl group or naphthyl group, j is 0 or 1, n₈ is 0.25∼1.25,
or (ii) the active ester is 3-40wt% of thermosetting resin composition.

7. The thermosetting resin composition according to claim 1, **characterized in that** (i) the additive flame retardant is selected from organic additive flame retardant except tetrabromobispheno 1-A,
or (ii) the additive flame retardant is selected from halogen flame retardant or/and phosphorus flame retardant,
or (iii) the additive flame retardant is selected from brominated flame retardant and / or phosphorus flame retardant having a 5% thermal decomposition temperature of 300°C or more, wherein the brominated flame retardant is preferably selected from one of decabromodiphenyl ether, brominated polystyrene, brominated polycarbonate, decabromodiphenyl ethane or ethylene bis-tetrabromo phthalimide, or a mixture of at least two thereof, or wherein the phosphorus flame retardant is preferably selected from any one of tri(2,6-dimethyl phenyl)phosphine, resorcinol bis[di(2,6-dimethyl phenyl)phosphate], resorcinol tetraphenyl diphenylphosphate, triphenyl phosphate, bisphenol-A bis(diphenyl phosphate), phosphazene flame retardant, 10-(2,5 dihydroxy phenyl)-10-hydro-9-oxa-10-phosphaphenanthrene-10-oxide, 10-(2,5-dihydroxy naphthyl)-10-hydro-9-oxa-10-pho sphaphenanthrene-10-oxide or 9,10-dihydro-9-oxa-10-phosphaphenanthrene-10-oxide flame retardant, or a mixture of at least two thereof,
or (iv) the proportion of the additive flame retardant is 5∼30wt% of thermosetting resin composition.

8. The thermosetting resin composition according to claim 1, **characterized in that** the thermosetting resin composition also comprises filler, wherein the filler is preferably anyone selected from aluminum hydroxide, magnesium hydroxide, kaolin, talc, hydrotalcite, calcium silicate, beryllia, boron nitride, glass powder, silica powder, zinc borate, aluminum nitride, silicon nitride, silicon carbide, magnesia, zirconia, mullite, titanium dioxide, potassium titanate, hollow glass beads, potassium titanate fibers, silicon carbide single crystal fibers, silicon nitride fibers, alumina whiskers, short glass fibers, polytetrafluoroethylene powder, polyphenyl sulfide powder, polystyrene powder, or a mixture of at least two thereof, or wherein the proportion of the filler is preferably 5∼60wt% of thermosetting resin composition.

9. The thermosetting resin composition according to claim 1, **characterized in that**, the thermosetting resin composition also comprises catalyst and/or solvent, wherein the catalyst is preferably selected from one of tertiary amine, tertiary phosphine, quaternary ammonium salt, quaternary phosphonium salt and imidazole compound, or a mixture of at least two thereof,
the tertiary amine preferably being anyone selected from triethylamine, tributylamine, dimethylaminoethanol, N,N-dimethyl-pyridine amine or benzyl dimethylamine, or a mixture of at least two thereof,
the tertiary phosphine preferably being selected from triphenylphosphine or/and trialkylphosphine,
the quaternary ammonium salt preferably being anyone selected from tetramethylammonium bromide, tetramethyl ammonium chloride, tetramethyl ammonium iodide, benzyl trimethyl ammonium chloride, benzyl triethyl ammonium chloride or hexadecyl trimethyl ammonium bromide, or a mixture of at least two thereof,
the quaternary phosphonium salt preferably being anyone selected from tetrabutylphosphonium chloride, tetrabutylphosphonium bromide, tetrabutylphosphonium iodide, tetraphenylphosphonium chloride, tetraphenylphosphonium bromide, tetraphenylphosphonium iodide, ethyl-triphenylphosphonium chloride, propyl-triphenylphosphonium chloride, propyl-triphenylphosphonium bromide, propyl-triphenylphosphonium iodide, butyl-triphenylphosphonium chloride, butyl-triphenylphosphonium bromide, butyl-triphenylphosphonium iodide, or a mixture of at least two thereof,
the imidazole compound preferably being one selected from 2-methylimidazole, 2-ethyl-4-methylimidazole, 2-phenyl imidazole, 2-undecyl imidazole, 1-benzyl-2-methylimidazole, 2-heptadecyl imidazole, 2-isopropyl imidazole, 2-phenyl-4-methylimidazole, 2-dodecyl imidazole or cyanoethyl-2-methylimidazole, or a mixture of at least two thereof,
or wherein the proportion of the catalyst is 0.001 ∼ 5.0wt% of thermosetting resin composition,
or wherein the solvent is one selected from ketone, hydrocarbon, ether, ester or aprotic solvent, or a mixture of at least two thereof.

10. The thermosetting resin composition according to claim 1, **characterized in that**, the thermosetting resin composition also comprises anyone of polyphenylene ether, cyanate ester resin or BT (bismaleimide-triazine) resin, or a mixture of at least two thereof.

11. The thermosetting resin composition according to claim 10, **characterized in that**, the cyanate ester resin is selected from any one or a mixture of at least two of the following monomers, or from any one or a mixture of at least two of prepolymers of the following monomers, or made from any one or a mixture of at least two of the following monomers and any one or a mixture of at least two of prepolymers of the following monomers; the monomers are bisphenol-A cyanate, 2,2-bis (cyanate phenyl) propane, bis (cyanate phenyl) ethane, bis (cyanate phenyl) methane, bis (4-cyanate-3,5-dimethylphenyl) methane, 2,2-bis (4- cyanate phenyl)hexafluoropropane, bis (4- cyanate phenyl) thioether, novolac cyanate or cyanate containing dicyclopentadiene structure.

12. The thermosetting resin composition according to claim 1, **characterized in that**, the thermosetting resin composition also comprises any one of dye, pigment, surfactant, leveling agent and ultraviolet absorber, or a mixture of at least two thereof.

13. Use of the thermosetting resin composition according to claim 1 in the preparation of resin sheets, resin composite metal foils and prepregs.

14. Use of the resin sheets, resin composite metal foils and prepregs according to claim 13 in the preparation of laminates, metal-clad laminates and printed wiring boards.

## Patentansprüche

1. Wärmehärtbare Harzzusammensetzung, **dadurch gekennzeichnet, dass** die wärmehärtbare Harzzusammensetzung umfasst: ein Epoxidharz verschieden von einem bromierten Epoxidharz, ein Styrol-Maleinsäureanhydrid-Copolymer und ein flammhemmendes Additiv; die wärmehärtbare Harzzusammensetzung umfasst ferner einen aktiven Ester; das Massenverhältnis zwischen dem aktiven Ester und dem Styrol-Maleinsäureanhydrid-Copolymer ist 0,1 bis 8:1 und das molare Verhältnis zwischen der Summe der Estergruppe in dem aktiven Ester und der Anhydridgruppe im Styrol-Maleinsäureanhydrid-Copolymer, und der Epoxidgruppe im Epoxidharz ist 1:0,5-1,5.

2. Wärmehärtbare Harzzusammensetzung nach Anspruch 1, **dadurch gekennzeichnet, dass** das Styrol-Maleinsäureanhydrid-Copolymer die folgende Formel aufweist: 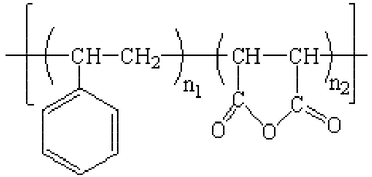 n₁:n₂ = 0,8-19:1.

3. Wärmehärtbare Harzzusammensetzung nach Anspruch 1, **dadurch gekennzeichnet, dass** das zahlenmittlere Molekulargewicht des Styrol-Maleinsäureanhydrid-Copolymers 1000-50000 ist.

4. Wärmehärtbare Harzzusammensetzung gemäß Anspruch 1, **dadurch gekennzeichnet, dass** das Epoxidharz eines oder eine Mischung aus mindestens zwei ausgewählt aus den folgenden Epoxidharzen ist: 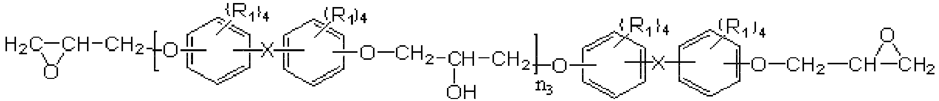 R₁ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; n₃ ist eine natürliche Zahl; X ist ausgewählt aus -CH₂-, -O-, -CO-, -SO₂-, -S-, -CH(C₆H₅)-, -C(C₆H₅)₂-, -CH(CH₃)-, -C(CH₃)₂-, oder 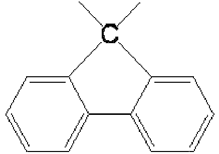 oder 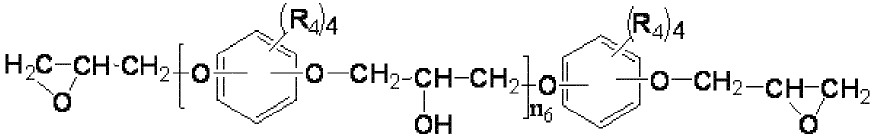 R₄ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; n₆ ist eine natürliche Zahl;
oder ein Phenol-Novolac-Epoxidharz, Cresol-Novolac-Epoxidharz, Bisphenol-A-Novolac-Epoxidharz, Bisphenol-F-Epoxidharz, Dicyclopentadien-Epoxidharz, Biphenyl-Epoxidharz, Resorcinol-Phenol-Epoxidharz, Naphthalen-Epoxidharz, phosphorhaltigem Epoxidharz, silikonhaltigem Epoxidharz, Glycidyl-Amin-Epoxidharz, alizyklischem Epoxidharz, Polyethylen-Glycol-Epoxidharz, Tetraphenol-Ethan-Tetraglycidylether, Triphenyl-Glycidylethermethan, oder eine Mischung von mindestens zwei davon.

5. Wärmehärtbare Harzzusammensetzung nach Anspruch 1, **dadurch gekennzeichnet, dass** das Epoxidharz eines oder eine Mischung von mindestens zwei ausgewählt aus Epoxidharzen mit der folgenden Struktur ist: 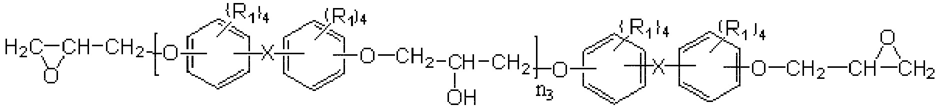 R₁ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; n₃ ist eine natürliche Zahl; X ist ausgewählt aus -CH₂-, -O-, -CO-, -SO₂-, -S-, -CH(C₆H₅)-, -C(C₆H₅)₂-, -CH(CH₃)-, -C(CH₃)₂- oder 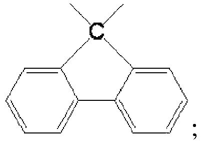 oder 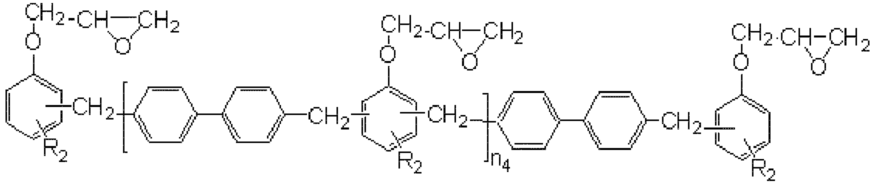 R₂ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; 0 ≤ n₄ ≤ 20 und n₄ ist eine ganze Zahl;
oder 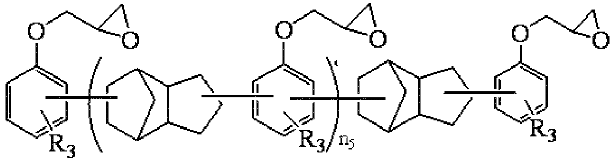 R₃ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; 0 ≤ n₅ ≤ 20 und n₅ ist eine ganze Zahl;
oder 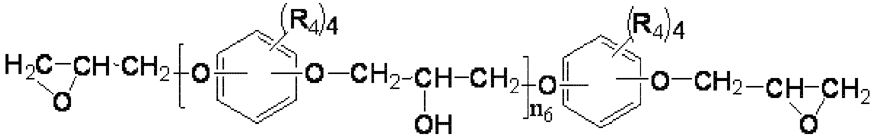 R₄ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; n₆ ist eine natürliche Zahl; 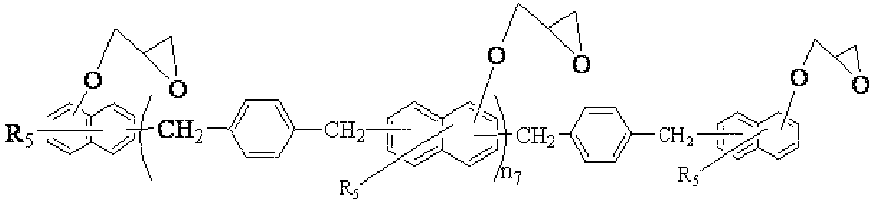 R₅ ist ausgewählt aus einem Wasserstoffatom, einer substituierten oder unsubstituierten C1-C8 linearen Alkylgruppe, einer substituierten oder unsubstituierten C1-C8 verzweigten Alkylgruppe, einer substituierten oder unsubstituierten alizyklischen Alkylgruppe, einer substituierten oder unsubstituierten C1-C10 Alkoxygruppe, einer substituierten oder unsubstituierten Phenylgruppe; 0 ≤ n₇ ≤ 20 und n₇ ist eine ganze Zahl.

6. Wärmehärtbare Harzzusammensetzung nach Anspruch 1, **dadurch gekennzeichnet, dass** (i) der aktive Ester die folgende Formel aufweist: 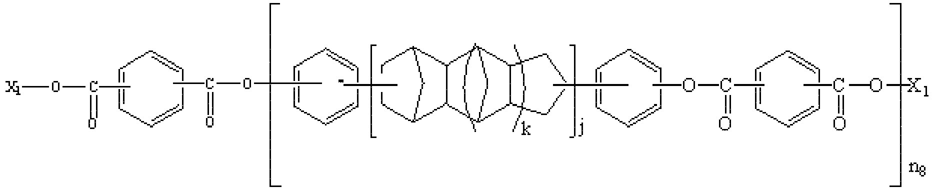 X₁ ist eine Phenylgruppe oder eine Naphtylgruppe, j ist 0 oder 1, n₈ ist 0,25-1,25,
oder (ii) der aktive Ester 3-40 Gew.-% der wärmehärtbaren Zusammensetzung ausmacht.

7. Wärmehärtbare Harzzusammensetzung nach Anspruch 1, **dadurch gekennzeichnet, dass** (i) das flammhemmende Additiv ausgewählt ist aus einem organischem flammhemmenden Additiv ausgenommen Tetrabromobisphenol-A,
oder (ii) das flammhemmende Additiv ausgewählt ist aus einem halogenhaltigen Flammschutzmittel und/oder einem phosphorhaltigen Flammschutzmittel,
oder (iii) das flammhemmende Additiv ausgewählt ist aus einem bromierten Flammschutzmittel und/oder einem phosphorhaltigen Flammschutzmittel mit einer 5% thermischen Zersetzungstemperatur von 300 °C oder mehr, wobei das bromierte Flammschutzmittel vorzugsweise ausgewählt ist aus einem von Decabromdiphenylether, bromiertem Polystyrol, bromiertem Polycarbonat, Decabromdiphenylethan oder Ethylenbis-tetrabrom-phthalimid, oder einer Mischung von mindestens zwei davon, oder wobei das phosphorhaltige Flammschutzmittel vorzugsweise ausgewählt ist aus einem von Tri(2,6-dimethylphenyl)phosphin, Resorcinol-bis[di(2,6-dimethylphenyl)phosphat], Resorcinol-tetraphenyldiphenylphosphat, Triphenylphosphat, Bisphenol-A-bis(diphenylphosphat), Phosphazen-Flammschutzmittel, 10-(2,5-Dihydroxyphenyl)-10-hydro-9-oxa-10-phosphaphenanthren-10-oxid, 10-(2,5-Dihydroxynaphthyl)-10-hydro-9-oxa-10-phosphaphenanthren-10-oxid oder 9,10-Dihydro-9-oxa-10-phosphaphenanthren-10-oxid Flammschutzmittel, oder einer Mischung von mindestens zwei davon,
oder (iv) der Anteil des flammhemmenden Additivs 5-30 Gew.-% der wärmehärtbaren Zusammensetzung ist.

8. Wärmehärtbare Harzzusammensetzung nach Anspruch 1, **dadurch gekennzeichnet, dass** die wärmehärtbare Zusammensetzung auch einen Füllstoff umfasst, wobei der Füllstoff vorzugsweise aus Aluminiumhydroxid, Magnesiumhydroxid, Kaolin, Talkum, Hydrotalcit, Kalziumsilikat, Berylliumoxid, Bornitrid, Glasspulver, Siliciumoxidpulver, Zinkborat, Aluminiumnitrid, Siliciumnitrid, Siliciumcarbid, Magnesiumoxid, Zirconiumoxid, Mullit, Titandioxid, Kaliumtitanat, hohle Glassperlen, Kaliumtitanatfasern, Siliziumcarbid-Einkristallfasern, Siliziumnitridfasern, Aluminiumoxidhaaren, kurzen Glassfasern, Polytetrafluorethylenpulver, Polyphenylsulfidpulver, Polystyrolpulver, oder einer Mischung von mindestens zwei davon ausgewählt ist, oder wobei der Anteil des Füllstoffs vorzugsweise 5-60 Gew.-% der wärmehartbaren Harzzusammensetzung ist.

9. Wärmehärtbare Harzzusammensetzung nach Anspruch 1, **dadurch gekennzeichnet, dass** die wärmehärtbare Zusammensetzung ferner einen Katalysator und/oder ein Lösungsmittel enthält, wobei der Katalysator vorzugsweise ausgewählt ist aus einem von tertiärem Amin, tertiärem Phosphin, quartärem Ammoniumsalz, quartärem Phosphoniumsalz und einer Imidazolverbindung, oder einer Mischung von mindestens zwei davon,
wobei das tertiäre Amin vorzugsweise ausgewählt ist aus Triethylamin, Tributylamin, Dimethylaminoethanol, N,N-dimethylpyridinamin oder Benzyldimethylamin, oder einer Mischung von mindestens zwei davon,
wobei das tertiäre Phosphin vorzugsweise ausgewählt ist aus Triphenylphosphin oder/und Trialkylphosphin,
wobei das quartäre Ammoniumsalz vorzugsweise ausgewählt ist aus Tetramethylammoniumbromid, Tetramethylammoniumchlorid, Tetramethylammonium iodid, Benzyl-trimethylammoniumchlorid, Benzyl-triethylammoniumchlorid or Hexadecyltrimethylammoniumbromid, oder einer Mischung von mindestens zwei davon,
wobei das quartäre Phosphoniumsalz vorzugsweise ausgewählt ist aus Tetrabutylphosphoniumchlorid, Tetrabutylphosphoniumbromid, Tetrabutylphosphoniumiodid, Tetraphenylphosphoniumchlorid, Tetraphenylphosphoniumbromid, Tetraphenylphosphoniumiodid, Ethyltriphenylphosphoniumchlorid, Propyl-triphenylphosphoniumchlorid, Propyltriphenylphosphoniumbromid, Propyl-triphenylphosphoniumiodid, Butyltriphenylphosphoniumchlorid, Butyl-triphenylphosphoniumbromid, Butyltriphenylphosphoniumiodid, oder einer Mischung von mindestens zwei davon,
wobei die Imidazolverbindung vorzugsweise ausgewählt ist aus 2-Methylimidazol, 2-Ethyl-4-methylimidazol, 2-Phenylimidazol, 2-Undecylimidazol, 1-Benzyl-2-methylimidazol, 2-Heptadecylimidazol, 2-Isopropylimidazol, 2-Phenyl-4-methylimidazol, 2-Dodecyl imidazol oder Cyanoethyl-2-methylimidazol, oder einer Mischung von mindestens zwei davon,
oder wobei der Anteil des Katalysators 0,001 - 5,0 Gew.-% der wärmehartbaren Zusammensetzung ist.

10. Wärmehärtbare Harzzusammensetzung nach Anspruch 1, **dadurch gekennzeichnet, dass** die wärmehärtbare Harzzusammensetzung ferner eines von Polyphenylenether, Cyanatesterharz oder BT (Bismaleimid-triazin)-Harz, oder eine Mischung von mindestens zwei davon, umfasst.

11. Wärmehärtbare Harzzusammensetzung nach Anspruch 10, **dadurch gekennzeichnet, dass** das Cyanatesterharz ausgewählt ist aus einem oder einer Mischung von mindestens zwei der folgenden Monomere, oder aus einem oder einer Mischung von mindestens zwei Präpolymeren der folgenden Monomere, oder hergestellt ist aus einem oder einer Mischung von mindestens zwei der folgenden Monomere und einem oder einer Mischung von mindestens zwei Präpolymeren der folgenden Monomere; die Monomere sind Bisphenol-A-cyanat, 2,2-Bis-(cyanat-phenyl)propan, Bis(cyanate-phenyl)ethan, Bis-(cyanat-phenyl)methan, Bis-(4-cyanat-3,5-dimethylphenyl)methan, 2,2-Bis(4-cyanat- phenyl)hexafluorpropan, Bis-(4-cyanatphenyl)thioether, Novolaccyanat oder eine cyanathaltige Dicyclopentadienstruktur.

12. Wärmehärtbare Harzzusammensetzung nach Anspruch 1, **dadurch gekennzeichnet, dass** die wärmehärtbare Harzzusammensetzung ferner eines von Farbstoff, Pigment, Tensid, Verlaufmittel und Ultraviolettabsorber, oder eine Mischung aus mindestens zwei davon, umfasst.

13. Verwendung der wärmehärtbaren Harzzusammensetzung nach Anspruch 1 zur Herstellung von Harzplatten, Harzverbundmetallfolien und Prepregs.

14. Verwendung der Harzplatten, Harzverbundmetallfolien und Prepregs gemäß Anspruch 13 zur Herstellung von Laminaten, metallkaschierten Laminaten und Leiterplatten.

## Revendications

1. Composition de résine thermodurcissable, **caractérisée en ce que** la composition de résine thermodurcissable comprend : une résine époxy autre qu'une résine époxy bromée, un copolymère de styrène-anhydride maléique et un additif retardateur de flamme ; la composition de résine thermodurcissable comprend également un ester actif ; le rapport en masse entre l'ester actif et le copolymère de styrène-anhydride maléique est de 0,1 à 8 : 1, et le rapport molaire entre la somme du groupe ester dans l'ester actif et du groupe anhydride dans le copolymère de styrène-anhydride maléique, et le groupe époxy dans la résine époxy est de 1 : 0,5 à 1,5.

2. Composition de résine thermodurcissable selon la revendication 1, **caractérisée en ce que** le copolymère de styrène-anhydride maléique a la formule structurale suivante : 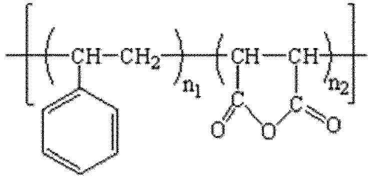 n₁ : n₂ = 0,8 à 19 : 1.

3. Composition de résine thermodurcissable selon la revendication 1, **caractérisée en ce que** le poids moléculaire moyen en nombre du copolymère de styrène-anhydride maléique est de 1 000 à 50 000.

4. Composition de résine thermodurcissable selon la revendication 1, **caractérisée en ce que** la résine époxy est l'un ou un mélange d'au moins deux éléments sélectionnés parmi les résines époxy suivantes : 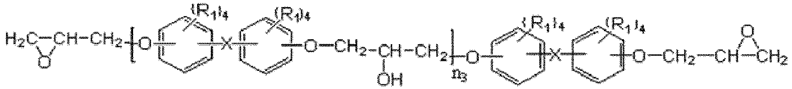 R₁ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; n₃ est tout nombre naturel ; X est l'un quelconque sélectionné parmi -CH₂-, -O-, -CO-, -SO₂-, -S-, -CH(C₆H₅)-, -C(C₆H₅)₂-, -CH(CH₃)-, -C(CH₃)₂-, ou 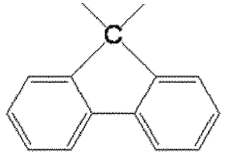 ou 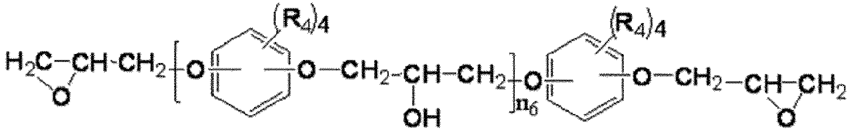 R₄ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; n₆ est tout nombre naturel ;
ou, l'un parmi une résine époxy phénol novolaque, une résine époxy crésol novolaque, une résine époxy bisphénol-A novolaque, une résine époxy bisphénol-F, une résine époxy dicyclopentadiène, une résine époxy biphényle, une résine époxy résorcinol phénol, une résine époxy naphtalène, une résine époxy contenant du phosphore, une résine époxy contenant du silicium, une résine époxy glycidylamine, une résine époxy alicyclique, une résine époxy polyéthylène glycol, le tétraphénol éthane tétraglycidyléther, le triphényl glycidyléther méthane, ou un mélange d'au moins deux de ceux-ci.

5. Composition de résine thermodurcissable selon la revendication 1, **caractérisée en ce que** la résine époxy est l'un ou un mélange d'au moins deux éléments sélectionnés parmi des résines époxy ayant la structure suivante : 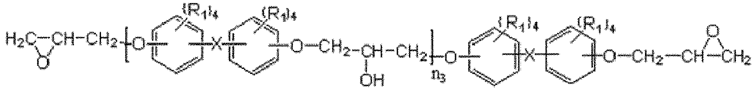 R₁ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; n₃ est tout nombre naturel ; X est l'un quelconque sélectionné parmi -CH₂-, -O-, -CO-, -SO₂-, -S-, -CH(C₆H₅)-, -C(C₆H₅)₂-, -CH(CH₃)-, -C(CH₃)₂-, ou 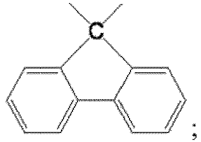 ou 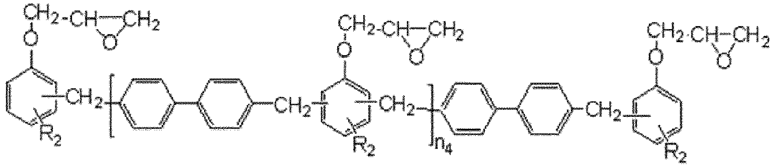 R₂ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; 0 ≤ n₄ ≤ 20, et n₄ est un entier ;
ou, 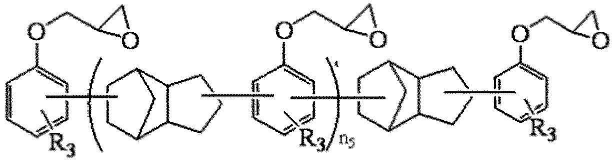 R₃ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; 0 ≤ n₅ ≤ 20, et n₅ est un entier ;
ou, 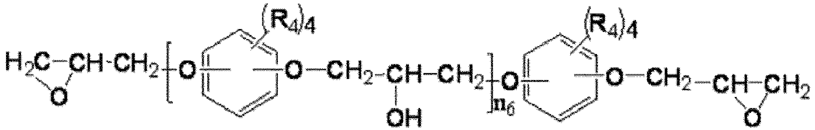 R₄ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; n₆ est tout nombre naturel ; 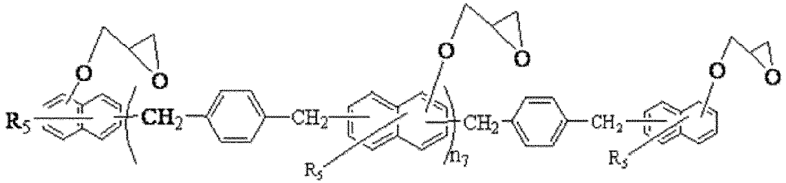 R₅ est sélectionné parmi un atome d'hydrogène, un groupe alkyle linéaire en C₁ à C₈ substitué ou non substitué, un groupe alkyle ramifié en C₁ à C₈ substitué ou non substitué, un groupe alkyle alicyclique substitué ou non substitué, un groupe alcoxy en C₁ à C₁₀ substitué ou non substitué, un groupe phényle substitué ou non substitué ; 0 ≤ n₇ ≤ 20, et n₇ est un entier ;

6. Composition de résine thermodurcissable selon la revendication 1, **caractérisée en ce que** (i) l'ester actif a la structure suivante : 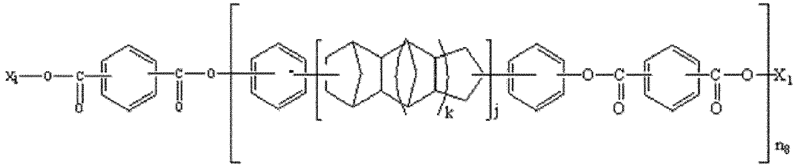 X₁ est un groupe phényle ou un groupe naphtyle, j vaut 0 ou 1, n₈ vaut 0,25 à 1,25,
ou (ii) l'ester actif constitue 3 à 40 % en poids de la composition de résine thermodurcissable.

7. Composition de résine thermodurcissable selon la revendication 1, **caractérisée en ce que** (i) l'additif retardateur de flamme est sélectionné parmi un additif retardateur de flamme organique à l'exception du tétrabromobisphénol A.
ou (ii) l'additif retardateur de flamme est sélectionné parmi un additif retardateur de flamme halogéné et/ou un retardateur de flamme phosphore,
ou (iii) l'additif retardateur de flamme est sélectionné parmi un additif retardateur de flamme bromé et/ou un retardateur de flamme phosphore ayant une température de décomposition thermique à 5 % de 300 °C ou plus, dans laquelle le retardateur de flamme bromé est de préférence sélectionné parmi l'un du décabromodiphényléther, du polystyrène bromé, du polycarbonate bromé, du décabromodiphényl éthane, ou de l'éthylène bis-tétrabromo phtalimide, ou un mélange d'au moins deux d'entre eux, ou dans laquelle le retardateur de flamme phosphore est de préférence sélectionné parmi l'un quelconque de la tri-(2,6-diméthylphényl)phosphine, du bis[di(2,6-diméthylphényl)phosphate] de résorcinol, du tétraphényl diphénylphosphate de résorcinol, du phosphate de triphényle, du bis(diphényl phosphate) de bisphénol A, d'un retardateur de flamme phosphazène, d'un retardateur de flamme 10-(2,5-dihydroxyphényl)-10-hydro-9-oxa-10-phosphaphénanthrène-10-oxyde, 10-(2,5-dihydroxynaphtyl)-10-hydro-9-oxa-10-phosphaphénanthrène-10-oxyde ou 9,10-dihydro-9-oxa-10-phosphaphénanthrène-10-oxyde, ou d'un mélange d'au moins deux d'entre eux,
ou (iv) la proportion de l'additif retardateur de flamme constitue 5 à 30 % en poids de la composition de résine thermodurcissable.

8. Composition de résine thermodurcissable selon la revendication 1, **caractérisée en ce que** la composition de résine thermodurcissable comprend également une charge, dans laquelle la charge est de préférence l'un quelconque sélectionné parmi l'hydroxyde d'aluminium, l'hydroxyde de magnésium, le kaolin, le talc, l'hydrotalcite, le silicate de calcium, l'oxyde de béryllium, le nitrure de bore, la poudre de verre, la poudre de silice, le borate de zinc, le nitrure d'aluminium, le nitrure de silicium, le carbure de silicium, l'oxyde de magnésium, l'oxyde de zirconium, la mullite, le dioxyde de titane, le titanate de potassium, des billes de verre creuses, des fibres de titanate de potassium, des fibres monocristallines de carbure de silicium, des fibres de nitrure de silicium, des trichites d'alumine, des fibres de verre de silicium, une poudre de polytétrafluoroéthylène, une poudre de poly(sulfure de phényle), une poudre de polystyrène, ou un mélange d'au moins deux d'entre eux, ou dans laquelle la proportion de la charge est de préférence de 5 à 60 % en poids de la composition de résine thermodurcissable.

9. Composition de résine thermodurcissable selon la revendication 1, **caractérisée en ce que**, la composition de résine thermodurcissable comprend également un catalyseur et/ou un solvant, dans laquelle le catalyseur est de préférence sélectionné parmi l'un d'une amine tertiaire, d'une phosphine tertiaire, d'un sel d'ammonium quaternaire, d'un sel de phosphonium quaternaire et d'un composé imidazole, ou d'un mélange d'au moins deux d'entre eux ;
l'amine tertiaire étant de préférence l'un quelconque sélectionné parmi la triéthylamine, la tributylamine, le diméthylaminoéthanol, la N,N-diméythyl-pyridine amine ou la benzyl diméthylamine, ou un mélange d'au moins deux d'entre eux,
la phosphine tertiaire étant de préférence sélectionnée parmi la triphénylphosphine et/ou la trialkylphosphine,
le sel d'ammonium quaternaire étant de préférence l'un quelconque sélectionné parmi le bromure de tétraméthylammonium, le chlorure de tétraméthylammonium, l'iodure de tétraméthylammonium, le chlorure de benzyltriméthylammonium, le chlorure de benzyltriéthylammonium ou le bromure d'hexadécyltriméthylammonium, ou un mélange d'au moins deux d'entre eux,
le sel de phosphonium quaternaire étant de préférence l'un quelconque sélectionné parmi le chlorure de tétrabutylphosphonium, le bromure de tétrabutylphosphonium, l'iodure de tétrabutylphosphonium, le chlorure de tétraphénylphosphonium, le bromure de tétraphénylphosphonium, l'iodure de tétraphénylphosphonium, le chlorure d'éthyl-triphénylphosphonium, le chlorure de propyl-triphénylphosphonium, le bromure de propyl-triphénylphosphonium, l'iodure de propyl-triphénylphosphonium, le chlorure de butyl-triphénylphosphonium, le bromure de butyl-triphénylphosphonium, l'iodure de butyl-triphénylphosphonium, ou un mélange d'au moins deux d'entre eux,
le composé imidazole étant de préférence l'un sélectionné parmi le 2-méthylimidazole, le 2-éthyl-4-méthylimidazole, le 2-phénylimidazole, le 2-undécylimidazole, le 1-benzyl-2-méthylimidazole, le 2-heptadécylimidazole, le 2-isopropylimidazole, le 2-phényl-4-méthylimidazole, le 2-dodécylimidazole ou le cyanoéthyl-2-méthyldimidazole, ou un mélange d'au moins deux d'entre eux,
ou dans laquelle la proportion du catalyseur constitue 0,001 à 5,0 % en poids de la composition de résine thermodurcissable,
ou dans laquelle le solvant est l'un sélectionné parmi une cétone, un hydrocarbure, un éther, un ester ou un solvant aprotique, ou un mélange d'au moins deux d'entre eux.

10. Composition de résine thermodurcissable selon la revendication 1, **caractérisée en ce que**, la composition de résine thermodurcissable comprend également l'un quelconque parmi le polyphénylène éther, une résine d'ester de cyanate ou une résine BT (bismaléimide-triazine), ou un mélange d'au moins deux d'entre eux.

11. Composition de résine thermodurcissable selon la revendication 10, **caractérisée en ce que**, la résine d'ester de cyanate est sélectionnée parmi l'un quelconque ou un mélange d'au moins deux parmi les monomères suivants, ou parmi l'un quelconque ou un mélange d'au moins deux de prépolymères des monomères suivants, ou fabriquée à partir de l'un quelconque ou un mélange d'au moins deux des monomères suivants et l'un quelconque ou un mélange d'au moins deux prépolymères des monomères suivants ; les monomères sont le cyanate de bisphénol A, le 2,2-bis(cyanate phényl)propane, le bis(cyanate phényl)éthane, le bis(cyanate phényl)méthane, le bis(4-cyanate-3,5-diméthylphényl)méthane, le 2,2-bis(4-cyanate phényl)hexafluoropropane, le bis(4-cyanate phényl)thioéther, le cyanate de novolaque ou le cyanate contenant une structure dicyclopentadiène.

12. Composition de résine thermodurcissable selon la revendication 1, **caractérisée en ce que**, la composition de résine thermodurcissable comprend également l'un quelconque parmi une teinte, un pigment, un tensioactif, un agent de nivellement et un absorbant d'ultraviolets, ou un mélange d'au moins deux d'entre eux.

13. Utilisation de la composition de résine thermodurcissable selon la revendication 1 dans la préparation de feuilles en résine, de rubans de métal et résine composite et de préimprégnés.

14. Utilisation des feuilles en résine, de rubans de métal et résine composite et de préimprégnés selon la revendication 13, dans la préparation de stratifiés, de stratifiés revêtus de métal et de cartes imprimées.
